Europäisches Patentamt

European Patent Office

Office européen des brevets

(19)

(11) Publication number: **0 143 456 B1**

(12) **EUROPEAN PATENT SPECIFICATION**

(45) Date of publication of patent specification: **11.09.91**   (51) Int. Cl.⁵: **G06F 7/50**

(21) Application number: **84114286.2**

(22) Date of filing: **26.11.84**

(54) **Parallel adder circuit.**

(30) Priority: **28.11.83 JP 223553/83**

(43) Date of publication of application:
**05.06.85 Bulletin 85/23**

(45) Publication of the grant of the patent:
**11.09.91 Bulletin 91/37**

(84) Designated Contracting States:
**DE FR GB**

(56) References cited:
**FR-A- 2 516 675**
**US-A- 3 100 837**

**PATENT ABSTRACTS OF JAPAN, vol. 6, no. 27, (P-102)[905], 17th February 1982; & JP-A-56 147 235 (TOKYO SHIBAURA DENKI K.K.) 16-11-1981**

**PATENT ABSTRACTS OF JAPAN, vol. 8, no. 65 (P-263)[1502], 27th March 1984; & JP-A-58 213 342 (MATSUSHITA DENKI SANGYO K.K.) 12-12-1983**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Sahoda, Masayuki c/o Patent Division**
**KABUSHIKI KAISHA TOSHIBA 1-1 Shibaura 1-chome**
**Minato-ku Tokyo 105(JP)**
Inventor: **Tanaka, Fuminari c/o Patent Division**
**KABUSHIKI KAISHA TOSHIBA 1-1 Shibaura 1-chome**
**Minato-ku Tokyo 105(JP)**
Inventor: **Iida, Tetsuya c/o Patent Division**
**KABUSHIKI KAISHA TOSHIBA 1-1 Shibaura 1-chome**
**Minato-ku Tokyo 105(JP)**

(74) Representative: **Henkel, Feiler, Hänzel & Partner**
**Möhlstrasse 37.**
**W-8000 München 80(DE)**

## Description

The present invention relates to an adder circuit and, more particularly, to a parallel adder circuit.

With a multidigit parallel adder circuit which is to be operated at a high speed, it is required to remarkably shorten the propagation delay time between a carry input and a carry output of an adder circuit.

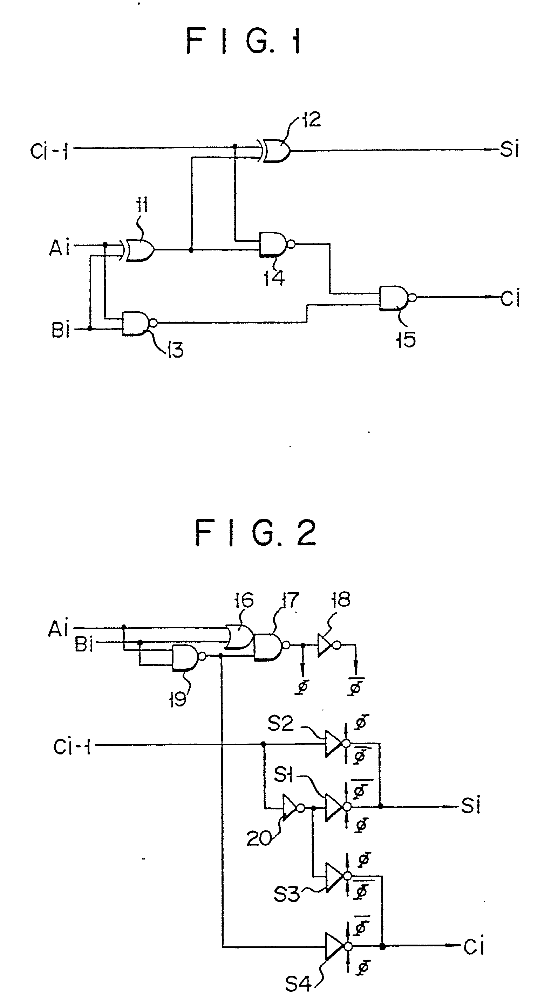

A conventional parallel adder circuit is constituted by using a full adder as shown in, e.g., Fig. 1. In Fig. 1, $A_i$ denotes an addend input; $B_i$ is an augend input; $C_{i-1}$ is a carry input from the preceding stage; $S_i$ a sum output; $C_i$ is a carry output to the succeeding stage; reference numerals 11 and 12 indicate EX-OR (EXCLUSIVE OR) gate circuits; and 13, 14 and 15 are NAND gate circuits.

However, in the above full adder, the propagation delay time corresponding to two stages of the NAND gate circuits is involved in the propagation of the carry signal; furthermore, the time delay corresponding to one stage of the EX-OR gate circuit occurs until the sum output $S_i$ is obtained.

As a full adder to improve such drawbacks, there is such a full adder as shown in Fig. 2 that is disclosed in JP Laid-Open Patent Applications Nos. 147235/1981 and 147236/1981. Namely, this full adder comprises: a control circuit including an OR gate circuit 16, an NAND gate circuit 17 and an inverter 18; an input circuit having an NAND gate circuit 19; and a switching circuit including an inverter 20 and clocked inverters $S_1$ to $S_4$. The control circuit is arranged to provide a control signal $\phi$ which becomes high when an addend input is equal to an augend input, and a control signal $\overline{\phi}$ complementary to $\overline{\phi}$. On the other hand, the clocked inverters $S_1$ and $S_4$ operates when the control signal $\phi$ is high, while the clocked inverters $S_2$ and $S_3$ operates when the inverted control signal $\overline{\phi}$ is high.

In this full adder, its arrangement is very simple and the maximum time delay in the carry propagation is involved by only switching circuit including the inverter 20. Also, the clocked inverters $S_1$ to $S_4$ whose operating speed is fairly faster than an NAND gate circuit are used as the switching circuit. Consequently, this full adder is very advantageous for a high speed operation.

However, even in such a full adder, a maximum time delay for the carry propagation occurs due to the inverter 20 and clocked inverter $S_1$. Therefore, a conventional multistage adder circuit having such full adders as described above is not satisfactory the carry propagation.

Prior art document FR-A-25 16 675 discloses a binary adder with a fastened carry propagation time and having binary adder transmission gates composed of MOSFETs. A three-input binary adder circuit has three couples of input signals, that is addends A, $\overline{A}$, augends B, $\overline{B}$ and carries C, $\overline{C}$.

Finally, prior art document US-A-3 100 837 describes a binary adder-subtracter which comprises flip-flops, "none"-gates and inverters, and performs an addition or subtraction.

It is an object of the present invention to provide parallel adder circuits which can constitute a parallel adder circuit arranged to shorten the carry propagation delay time.

To solve this object, the present invention provides a parallel adder circuit as stated in claim 1.

In this parallel adder circuit, first and second full adders each having an addend input terminal, an augend input terminal, a sum output terminal, a carry input terminal, and a carry output terminal are alternately connected such that the carry output terminal of the preceding-stage full adder is connected to the carry input terminal of the succeeding-stage full adder.

The first full adder comprises a first control circuit responsive to an addend input signal and an augend input signal applied to the addend input terminal and augend input terminal for providing a first switch control signal which becomes a first logical level when the addend input signal and augend input signal are equal and which becomes a second logical level when the input signals are not equal, a first input circuit connected to receive the addend and augend input signals to provide a NAND output signal or a NOR output signal of the input signals or an inverted signal of one of the input signals as an output signal, and a first switching circuit having first to fourth inverting type switching means, the first and fourth switching means being arranged to conduct when the first switch control signal from the first control circuit is at the first logical level, the second and third switching means being arranged to conduct when the first switch control signal from the first control circuit is at the second logical level, the first and second switching means being connected to respectively receive a carry inverted input signal from the preceding stage that is applied to the carry input terminal and its inverted signal, and having their outputs connected together to the sum output terminal, and the third and fourth switching means being connected to respectively receive the carry inverted input signal from the preceding stage that is applied to the carry input terminal and the output signal from the first input circuit, and having their outputs connected together to the carry output terminal.

The second full adder comprises a second control circuit responsive to the addend input signal and augend input signal applied to the addend input terminal and augend input terminal for providing a second switch control signal which becomes the first logical level when the addend input signal and augend input signal are equal and which becomes the second logical level when the input signals are not equal, a second input circuit connected to receive the addend and augend input signals to provide one of the input signals as an output signal, and a second switching circuit having fifth to eighth inverting type switching means, the sixth and eighth switching means being arranged to conduct when the second switch control signal from the second control circuit is at the first logical level, the fifth and seventh stitching means being arranged to conduct when the second switch control signal from the second control circuit is at the second logical level, the fifth and sixth switching means being connected to respectively receive a carry input signal from the preceding stage applied to the carry input terminal and its inverted signal, and having their outputs connected together to the sum output terminal, and the seventh and eighth switching means being connected to respectively receive the carry input signal from the preceding stage applied to the carry input terminal and the output signal from the second input circuit, and having their outputs connected together to the carry output terminal.

This invention can be more fully understood from the following detailed description when taken in conjunction with the accompanying drawings, in which:

Figs. 1 and 2 show conventional full adders for use in a parallel adder;

Figs. 3 and 4 show arrangements of first and second full adders for use in a parallel adder according to the present invention, respectively;

Figs. 5 and 6 show practical arrangements of the full adders of Figs. 3 and 4, respectively;

Fig. 7 is a circuit diagram of clocked inverters;

Figs. 8 shows a partial modification of the full adder; and

Fig. 9 shows an arrangement of a parallel adder of the invention.

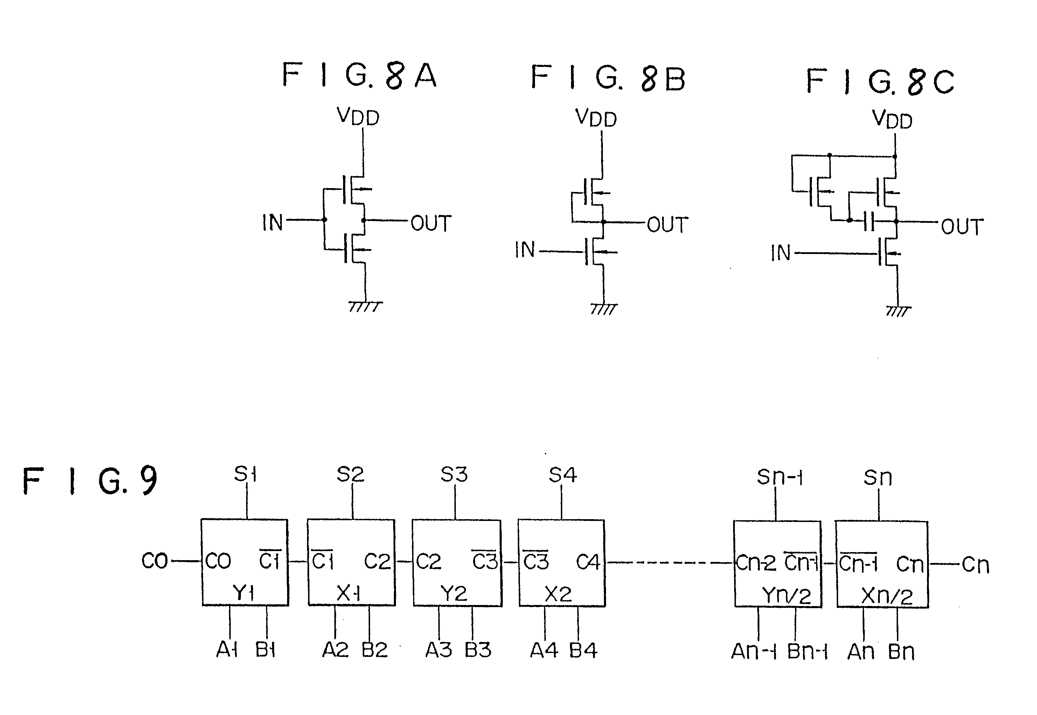

Fig. 9 shows an arrangement of a parallel adder circuit according to the present invention, in which first full adders $X_1$ to $X_{n/2}$ and second full adders $Y_1$ to $Y_{n/2}$ are alternately connected. The first full adders $X_1$ to $X_{n/2}$ receive an inverted carry input $\overline{C_{i-1}}$ and provide a carry output Ci. On the contrary, the second full adders $Y_1$ to $Y_{n/2}$ receive a carry input $C_{i-1}$ and provide an inverted carry output $\overline{C_i}$.

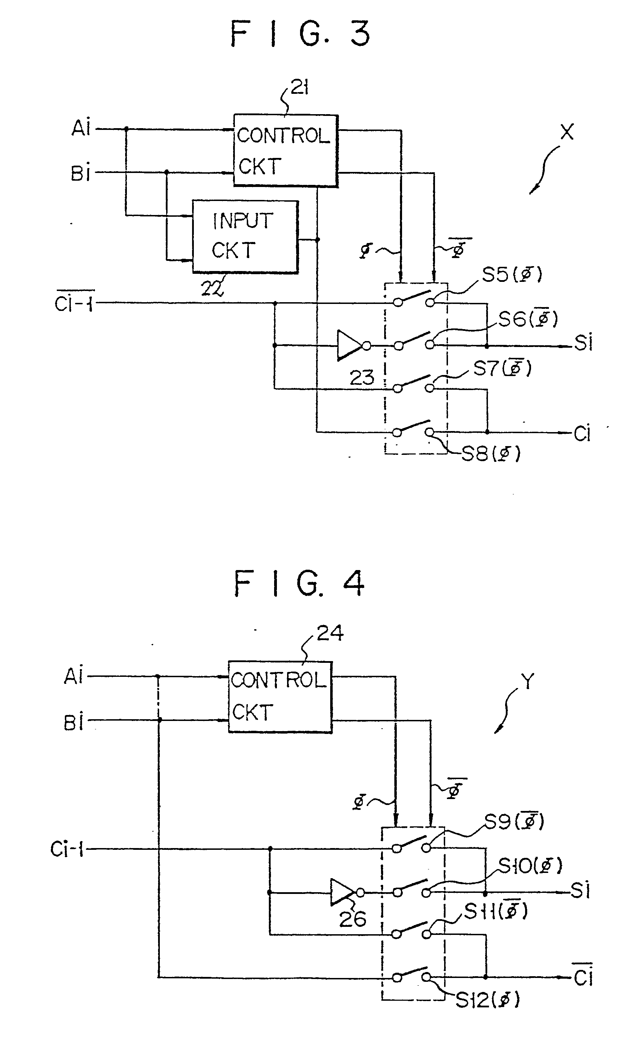

Figs. 3 and 4 show basic arrangements of the first and second full adders X and Y, respectively. That is, in the first full adder X shown in Fig. 3, the addend input $A_i$ and augend input $B_i$ are supplied to a control circuit 21 and an input circuit 22. The control circuit 21 provides a control signal $\phi$ which

becomes high when $A_i = B_i$ and its inverted control signal $\overline{\phi}$. On the other hand, the input circuit 22 provides a NAND output or NOR output of $A_i$ and $B_i$ or an inverted signal of one of $A_i$ and $B_i$. The output of the input circuit 22 is coupled to a switching circuit $S_8$.

In addition, as mentioned above, the carry inverted input $\overline{C_{i-1}}$ is applied to the first full adder X. The carry inverted input $\overline{C_{i-1}}$ is applied to switching circuits $S_5$ and $S_7$ and through an inverter 23 to a switching circuit $S_6$. The switching circuits $S_5$ to $S_8$ are controlled by the control signals $\phi$ and $\overline{\phi}$ and are inverting type switches which invert an input signal when they are ON. The switching circuits $S_5$ and $S_8$ are turned on when the control signal $\phi$ goes high, while they are turned off when the control signal $\phi$ goes low. The switching circuits $S_6$ and $S_7$ are turned on when the control signal $\overline{\phi}$ goes high and are turned off when the control signal $\overline{\phi}$ goes low. Outputs of the switching circuits $S_5$ and $S_6$ are connected together to provide a sum output $S_i$ and outputs of the switching circuits $S_7$ and $S_8$ are connected together to provide the carry output $C_i$.

Next, in the second full adder Y shown in Fig. 4, the addend input $A_i$ and augend input $B_i$ are applied to a control circuit 24 as in the first full adder X. An input terminal of a switching circuit $S_{12}$ is connected to one of the addend input terminal and the augend input terminal at a connecting point 25.

On the other hand, the carry input $C_{i-1}$ is applied to the second adder Y. This carry input $C_{i-1}$ is applied to switching circuits $S_9$ and $S_{11}$ and through an inverter 26 to a switching circuit $S_{10}$. These switching circuits $S_9$ to $S_{12}$ are controlled by the control signals $\phi$ and $\overline{\phi}$ and are inverting type switches like the switching circuits $S_5$ to $S_8$. The switching circuits $S_{10}$ and $S_{12}$ are turned on when the control signal $\phi$ becomes high and are turned off when the control signal $\phi$ becomes low. The switching circuits $S_9$ and $S_{11}$ are turned on when the control signal $\overline{\phi}$ goes high and are turned off when the control signal $\overline{\phi}$ goes low. Outputs of the switching circuits $S_9$ and $S_{10}$ are connected together to provide the sum output $S_i$ and outputs of the switching circuits $S_{11}$ and $S_{12}$ are connected together to provide the carry inverted output $\overline{C_i}$.

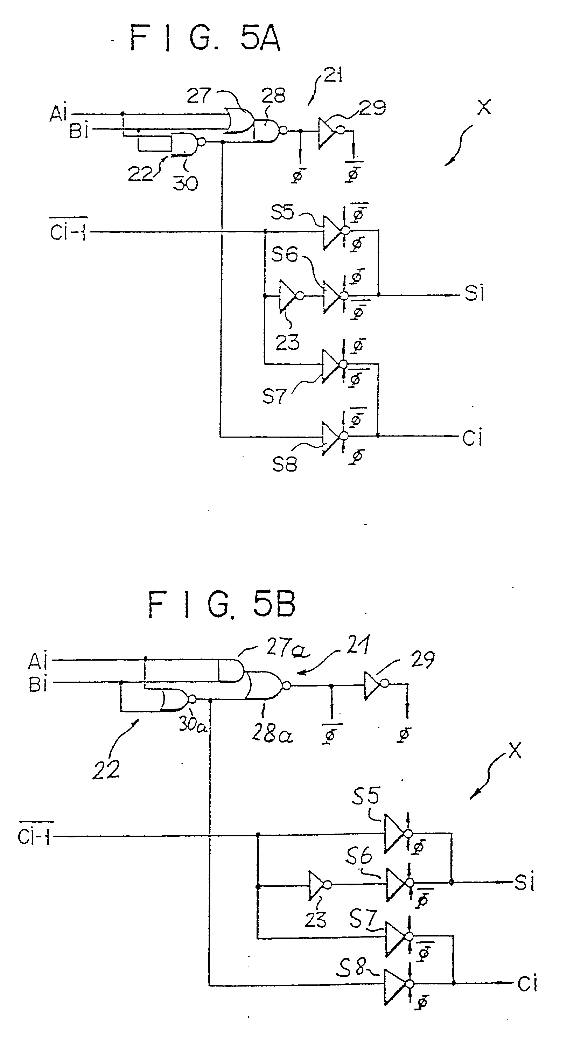

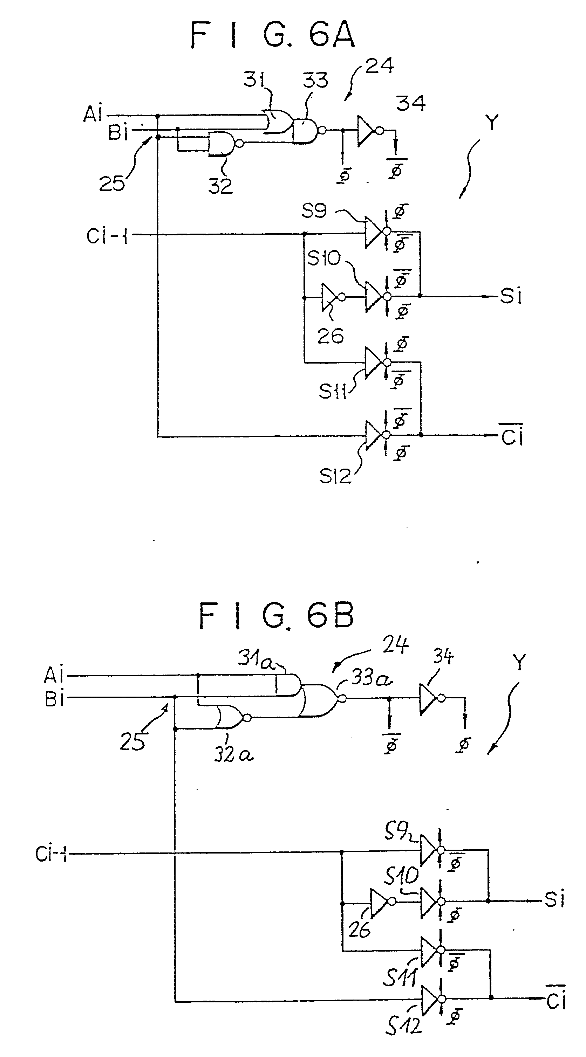

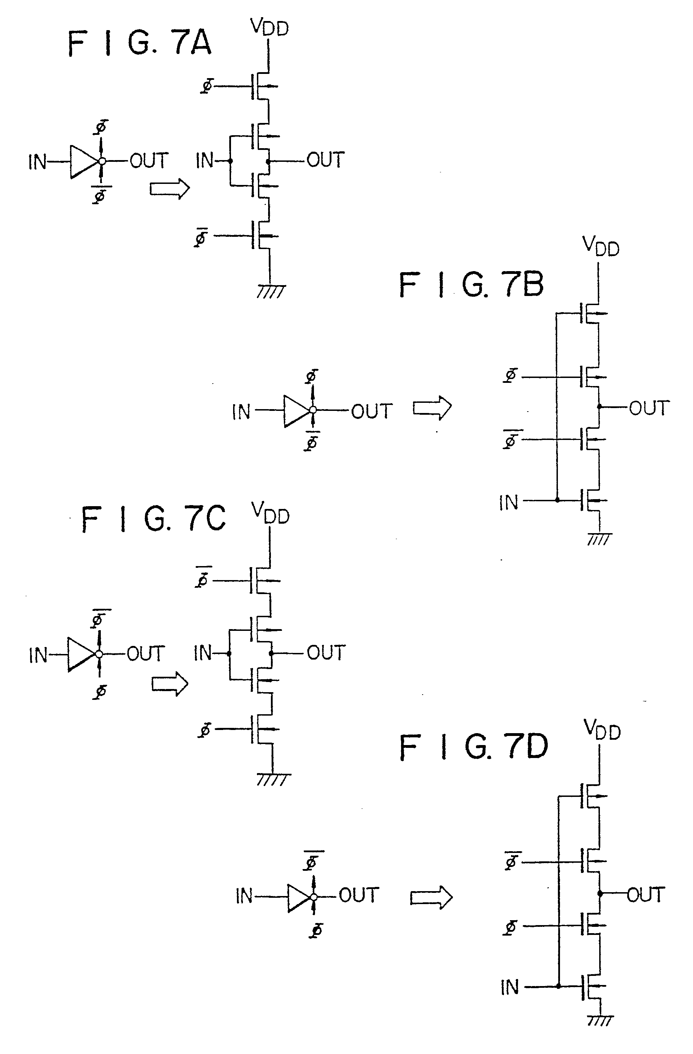

Figs. 5 and 6 show practical circuit arrangements of the first and second full adders X and Y shown in Figs. 4 and 5 respectively. Namely, in the first full adder X shown in Fig. 5A, the control circuit 21 is composed of an OR gate circuit 27 and an NAND gate circuit 28 and an inverter 29, while the input circuit 22 is composed of an NAND gate circuit 30. The output of the input circuit 22 is taken from an output of the NAND gate circuit 30. The switching circuits $S_5$ to $S_8$ are constituted by

clocked inverters having well-known C-MOS arrangements shown in Figs. 7A to 7D.

In the second full adder Y shown in Fig. 6, the control circuit 24 comprises an OR gate circuit 31 and NAND gate circuits 32 and 33 and an inverter 34. The switching circuits $S_9$ to $S_{12}$ are constituted by the clocked inverters shown in Figs. 7A to 7D.

The operations of the first and second full adders X and Y of Figs. 5 and 6 will now be described below. In the first full adder X, when the addend input $A_i$ and augend input $B_i$ are applied, the control signals $\phi$ and $\overline{\phi}$ are provided by the control circuit 21, so that the clocked inverters $S_5$ to $S_8$ are accordingly controlled. When the carry inverted input $\overline{C_{i-1}}$ is input, and $A_i = B_i$, the clocked inverters $S_5$ and $S_8$ are operative and the clocked inverters $S_6$ and $S_7$ are inoperative. Thus, the output of the input circuit 22 is inverted by the clocked inverter $S_8$ to be output from the carry output terminal $C_i$. On the contrary, when $A_i \neq B_i$, the clocked inverters $S_5$ and $S_8$ are inoperative and the clocked inverters $S_6$ and $S_7$ are operative; therefore, the carry inverted input $\overline{C_{i-1}}$ is inverted by the clocked inverter $S_7$ to be output from the carry output terminal $C_i$.

Next, in the second full adder Y, when the addend input $A_i$ and augend input $B_i$ are applied, the control signals $\phi$ and $\overline{\phi}$ are output from the control circuit 24, so that the clocked inverters $S_9$ to $S_{12}$ are accordingly controlled. When $A_i = B_i$, the clocked inverters $S_{10}$ and $S_{12}$ are operative and the clocked inverters $S_9$ and $S_{11}$ are inoperative. Therefore, the addend input $A_i$ or augend input $B_i$ is inverted by the clocked inverter $S_{12}$ to be output from the carry inverted output terminal $\overline{C_i}$. In contrast, when $A_i \neq B_i$, the clocked inverters $S_{10}$ and $S_{12}$ are inoperative and the clocked inverters $S_9$ and $S_{11}$ are operating. Thus, the carry input $C_{i-1}$ is inverted by the clocked inverter $S_{11}$ to be output from the carry inverted output terminal $\overline{C_i}$.

Namely, in each of the first and second full adders X and Y, the carry propagation delay time are caused due merely to one stage of clocked inverter at most. Therefore, as shown in Fig. 9, when the first and second full adders $X_1$ to $X_{n/2}$ and $Y_1$ to $Y_{n/2}$ are alternately connected, inverting circuits the number of which corresponds to the number of stages can be omitted in the carry propagation path.

Consequently, as compared with a conventional adder circuit whereby the delay time corresponding to two stages of gate circuits is needed as the carry propagation delay time of each full adder, the carry propagation delay time of each full adder of this invention merely equals the delay time corresponding to one stage of the switching circuit consisting of the clocked inverter at most. Thus, the carry propagation delay time can be fairly shortened. The invention is very advantageous in case of constituting a parallel adder circuit of a plurality of bits, in particular, an adder circuit having a long bit length.

The full adder circuit of Fig. 5A may be modified as shown in Fig. 5B and the full adder circuit of Fig. 6A may be modified as shown in Fig. 6B. As the inverter, a C-MOS type, an n-channel MOS type and a bootstrap type as shown in Figs. 8A to 8C, respectively, may be adopted.

## Claims

1. A parallel adder circuit characterized in that it comprises:

first and second full adders ($X_1$ to $X_{n/2}$ $Y_1$ to $Y_{n/2}$) each having an addend input terminal and augend input terminal, a carry input terminal, a sum output terminal, and a carry output terminal, said first and second full adders being alternately connected such that the carry output terminal of a preceding full adder is directly connected to the carry input terminal of a succeeding full adder;

each of said first full adders ($X_1$ to $X_{n/2}$) including:

a first control circuit (21) responsive to an addend input signal ($A_i$) and an augend input signal ($B_i$) applied to said addend input terminal and augend input terminal, respectively, for providing a first switch control signal ($\phi$, $\overline{\phi}$) which goes to a first logic level when the addend input signal and augend input signal are equal and which goes to a second logic level when they are not equal;

an input circuit (22) responsive to the addend and augend input signals for providing a NAND output signal or NOR output signal of the addend and augend input signals; and

a first switching circuit having first to fourth clocked inverters ($S_5$ to $S_8$) responsive to the first switch control signal ($\phi$, $\overline{\phi}$), said first and fourth clocked inverters ($S_5$, $S_8$) being enabled to invert an input signal applied thereto when the first switch control signal is at the first logic level, said second and third clocked inverters ($S_6$, $S_7$) being enabled to invert an input signal applied thereto when the first switch control signal is at the second logic level, said first and second clocked inverters ($S_5$, $S_6$) being connected to respectively receive a carry inverted input signal ($\overline{C_{i-1}}$) applied to said carry input terminal and a carry input signal ($C_{i-1}$), and having their outputs connected together to said sum output terminal, and said third and fourth clocked inverters ($S_7$, $S_8$) being connected to respectively receive the carry inverted input signal ($C_{i-1}$) applied to said carry input terminal and an output signal of said input circuit (22), and having their outputs connected together to said carry output terminal to provide a carry output signal ($C_i$); and

each of said second full adders ($Y_1$ to $Y_{n/2}$) comprising:

a second control circuit (24) responsive to the addend and augend input signals ($A_i$, $B_i$) for providing a second switch control signal ($\phi$, $\overline{\phi}$) which goes to the first logic level when the addend input signal and augend input signal are equal and which goes to the second logic level when the input signals are not equal;

a second switching circuit having fifth to eighth clocked inverters ($S_9$ to $S_{12}$) responsive to the second switch control signal ($\phi$, $\overline{\phi}$), said sixth and eighth clocked inverters ($S_{10}$, $S_{12}$) being enabled to invert an input signal applied thereto when the second switch control signal is at the first logic level, said fifth and seventh clocked inverters ($S_9$, $S_{11}$) being enabled to invert an input signal applied thereto when the second switch control signal is at the second logic level, said fifth and sixth clocked inverters ($S_9$, $S_{10}$) being connected to respectively receive a carry input signal ($C_{i-1}$) applied to said carry input terminal and a carry inverted input signal ($\overline{C_{i-1}}$), and having their outputs connected together to said sum output terminal, and said seventh and eighth clocked inverters ($S_{11}$, $S_{12}$) being connected to respectively receive the carry input signal ($C_{i-1}$) applied to said carry input terminal and one of said addend and augend signals ($A_i$, $B_i$), and having their outputs connected together to said carry output terminal to provide a carry inverted output signal ($\overline{C_i}$).

2. A parallel adder circuit according to claim 1, characterized in that said first control circuit (21) is composed of an OR gate (27), a first NAND gate (28) and an inverter (29), and said first input circuit (22) is composed of a second NAND gate (30); two input terminals of both said OR gate (27) and said second NAND gate (30) are connected respectively to said addend input (Ai) terminal and said augend input (Bi) terminal, and one input terminal of said first NAND gate (28) is connected to an output terminal of said OR gate (27) and the other input terminal of said first NAND gate (28) is connected to an output terminal of said second NAND gate (30), and an output terminal of said first NAND gate (28) is connected to an input terminal of said inverter (29), and said output terminal of said second NAND gate (30) is connected to an input terminal of said fourth clocked inverter (S8); and said output terminal of said first NAND gate (28) and an output terminal of said inverter (29) supply a control signal ($\phi$) and an inverted control signal ($\overline{\phi}$) respectively to said clocked inverters (S5 to S8).

3. A parallel adder circuit according to claim 1, characterized in that said first control circuit (21) is composed of an AND gate (27a), a first NOR gate (28a) and an inverter (29), and said first input circuit (22) is composed of a second NOR gate (30a); two input terminals of both said AND gate (27a) and said second NOR gate (30a) are connected respectively to said addend input (Ai) terminal and said augend input (Bi) terminal, and one input terminal of said NOR gate (28a) is connected to an output terminal of said AND gate (27a) and the other input terminal of said first NOR gate (28a) is connected to an output terminal of second said NOR gate (30a), and said output terminal of said first NOR gate (28a) is connected to an input terminal of said inverter (29), and said output terminal of said second NOR gate (30a) is connected to an input terminal of said fourth clocked interverter (S8); and said output terminal of said first NOR gate (28a) and said output terminal of said inverter (29) supply an inverted control signal ($\overline{\phi}$) and a control signal ($\phi$) respectively to said clocked inverters (S5 to S8).

4. A parallel adder circuit according to claim 1, characterized in that said second control circuit (24) is composed of an OR gate (31), a first NAND gate (33), an inverter (34), and a second NAND gate (32); two input terminals of both said OR gate (31) and said second NAND gate (32) are connected respectively to said addend input (Ai) terminal and said augend input (Bi) terminal, and one input terminal of said first NAND gate (33) is connected to an output terminal of said OR gate (31) and the other input terminal of said first NAND gate (33) is connected to an output terminal of said second NAND gate (32), and an output terminal of said first NAND gate (33) is connected to an input terminal of said inverter (34); and said output terminal of said first NAND gate (33) and an output terminal of said inverter (34) supply a control signal ($\phi$) and an inverted signal ($\overline{\phi}$) respectively to said clocked inverters (S9 to S12).

5. A parallel adder circuit according to claim 1, characterized in that said second control circuit (24) is composed of an AND gate (31a), a first NOR gate (33a), an inverter (34), and a second NOR gate (32a); two input terminals of both said AND gate (31a) and said second NOR gate (32a) are connected respectively to said addend input (Ai) terminal and said augend input (Bi) terminal, and one input terminal of said first NOR gate (33a) is connected to an output terminal of said AND gate (31a) and the other input terminal of said first NOR gate (33a) is connected to an output terminal of said second NOR gate (32a), and an output terminal of said first NOR gate (33a) is connected to an input terminal of said inverter (34); and said output terminal of said first NOR gate (33a) and an output terminal of said inverter (34) supply an inverter control signal ($\overline{\phi}$) and a control signal ($\phi$) respectively to said clocked inverters (S9 to S12).

## Revendications

1. Circuit d'addition parallèle caractérisé en ce qu'il comprend :

des premier et second additionneurs complets ($X_1$ à $X_{n/2}$, $y_1$ à $Y_{n/2}$), chacun ayant une borne d'entrée de premier terme d'addition, une borne d'entrée de second terme d'addition, une borne d'entrée de retenue, une borne de sortie de somme, et une borne de sortie de retenue, lesdits premier et seconds additionneurs complets étant alternativement connectés de telle sorte que la borne de sortie de retenue de l'additionneur complet précédent soit directement connectée à la borne d'entrée de retenue de l'additionneur complet suivant ;

chacun desdits premiers additionneurs complets ($X_1$ à $X_{n/2}$) comprenant :

un premier circuit de commande (21) sensible à un signal d'entrée de premier terme d'addition ($A_i$) et à un signal d'entrée de second terme d'addition ($B_i$), ces signaux étant respectivement appliqués à la borne d'entrée de premier terme d'addition et à la borne d'entrée de second terme d'addition pour fournir un premier signal de commande de commutation ($\phi,\overline{\phi}$) qui prend un premier niveau logique lorsque le signal d'entrée de premier terme d'addition et le signal d'entrée de second terme d'addition sont égaux et qui prend un second niveau logique lorsque les signaux d'entrée ne sont pas égaux ;

un circuit d'entrée (22) sensible aux signaux d'entrée de premier terme d'addition et de second terme d'addition pour fournir un signal de sortie NON-ET ou un signal de sortie NON-OU des signaux d'entrée de premier terme d'addition et de second terme d'addition ; et

un premier circuit de commutation ayant des premier à quatrième inverseurs cadencés ($S_5$ à $S_8$) sensibles au premier signal de commande de commutation ($\phi$, $\overline{\phi}$), lesdits premier et quatrième inverseurs cadencés ($S_5$ $S_8$) permettant d'inverser un signal d'entrée qui leur est appliqué lorsque le premier signal de commande de commutation est au premier niveau logique, lesdits second et troisième inverseurs cadencés ($S_6$ $S_7$) permettant d'inverser un signal d'entrée qui leur est appliqué lorsque le premier signal de commande de commutation est au premier niveau logique, lesdits second et troisième inverseurs cadencés ($S_6$ $S_7$) étant validés pour inverser un signal d'entrée inversé qui leur est appliqué quand le premier signal de commande de commutation est au second niveau logique, lesdits premier et second inverseurs cadencés ($S_5$, $S_6$) étant connectés pour recevoir respectivement un signal d'entrée inversé de retenue ($\overline{C_{i-1}}$) appliqué à ladite borne d'entrée de retenue et un signal d'entrée de retenue ($C_{i-1}$), et ayant leurs sorties connectées ensemble à ladite borne de sortie de somme, et lesdits troisième et quatrième inverseurs cadencés ($S_7$ $S_8$) étant connectés pour recevoir respectivement le signal d'entrée inversé de retenue ($C_{i-1}$) appliqué à ladite borne d'entrée de retenue et un signal de sortie dudit circuit d'entrée (22), et ayant leurs sorties connectées ensemble à ladite borne de sortie de retenue pour fournir un signal de sortie de retenue ($C_i$) ; et

chacun desdits seconds additionneurs complets ($Y_1$ à $Y_{n/2}$) comprenant :

un second circuit de commande (24) sensible au signal d'entrée de premier terme d'addition et au signal d'entrée de second terme d'addition ($A_i$, $B_i$) pour fournir un second signal de commande de commutation ($\phi,\overline{\phi}$) qui prend le premier niveau logique lorsque le signal d'entrée de premier terme d'addition et le signal d'entrée de second terme d'addition sont égaux et qui prend le second niveau logique lorsque les signaux d'entrée ne sont pas égaux ;

un second circuit de commutation ayant des cinquième à huitième inverseurs cadencés ($S_9$ à $S_{12}$) sensibles au second signal de commande de commutation ($\phi$, $\overline{\phi}$), lesdits sixième et huitième inverseurs cadencés ($S_{10}$, $S_{12}$) permettant d'inverser un signal d'entrée qui leur est appliqué lorsque le second signal de commande de commutation est au premier niveau logique, lesdits cinquième et septième inverseurs cadencés ($S_9$, $S_{11}$) permettant d'inverser un signal d'entrée qui leur est appliqué lorsque le second signal de commande de commutation est au second niveau logique, lesdits cinquième et sixième inverseurs caden-

cés ($S_9$, $S_{10}$) étant connectés pour recevoir respectivement un signal d'entrée de retenue ($C_{i-1}$) appliqué à ladite borne d'entrée de retenue et un signal d'entrée inversé de retenue ($\overline{C_{i-1}}$), et ayant leurs sorties connectées ensemble à ladite borne de sortie de somme, et lesdits septième et huitième inverseurs cadencés ($S_{11}$, $S_{12}$) étant connectés pour recevoir respectivement le signal d'entrée de retenue ($C_{i-1}$) qui est appliqué à ladite borne d'entrée de retenue et un desdits signaux de premier terme d'addition et de second terme d'addition ($A_i$, $B_i$), et ayant leurs sorties connectées ensemble à ladite borne de sortie de retenue pour fournir un signal de sortie inversé de retenue ($\overline{C_i}$).

2. Circuit d'addition parallèle selon la revendication 1, caractérisé en ce que ledit premier circuit de commande (21) est constitué par une porte OU (27), par une porte NON-ET (28) et par un inverseur (29), et ledit premier circuit d'entrée (22) est constitué par une seconde porte NON-ET (30) ; deux bornes d'entrée à la fois de ladite porte OU (27) et de ladite seconde porte NON-ET (30) sont connectées respectivement à ladite borne d'entrée de premier terme d'addition ($A_i$) et à ladite borne d'entrée de second terme d'addition ($B_i$), et une borne d'entrée de ladite première porte NON-ET (28) est connectée à une borne de sortie de ladite porte OU (27) et l'autre borne d'entrée de ladite première porte NON-ET (28) est connectée à une borne de sortie de ladite seconde porte NON-ET (30), et une borne de sortie de ladite première porte NON-ET (28) est connectée à une borne d'entrée dudit inverseur (29), et ladite borne de sortie de ladite seconde porte NON-ET (30) est connectée à une borne d'entrée dudit quatrième inverseur cadencé ($S_8$) ; et ladite borne de sortie de ladite première porte NON-ET (28) et une borne de sortie dudit inverseur (29) acheminent un signal de commande ($\phi$) et un signal de commande inversé ($\overline{\phi}$) respectivement auxdits inverseurs cadencés (S5 à S8).

3. Circuit d'addition parallèle selon la revendication 1, caractérisé en ce que ledit premier circuit de commande (21) est constitué par une porte ET (27a), par une première porte NON-OU (28a) et par un inverseur (29), et ledit premier circuit d'entrée (22) est constitué par une seconde porte NON-OU (30a) ; deux bornes d'entrée à la fois de ladite porte ET (27a) et de ladite seconde porte NON-OU (30a) sont connectées respectivement à ladite borne d'entrée de premier terme d'addition ($A_i$) et à

ladite borne d'entrée de second terme d'addition ($B_i$), et une borne d'entrée de ladite porte NON-OU (28a) est connectée à une borne de sortie de ladite porte ET (27a) et l'autre borne d'entrée de ladite première porte NON-OU (28a) est connectée à une borne de sortie de ladite seconde porte NON-OU (30a), et ladite borne de sortie de ladite première porte NON-OU (28a) est connectée à une borne de sortie dudit inverseur (29), et ladite borne de sortie de ladite seconde porte NON-OU (30a) est connectée à une borne d'entrée dudit quatrième inverseur cadencé ($S_8$) ; et ladite borne de sortie de ladite première porte NON-OU (28a) et ladite borne de sortie dudit inverseur (29) acheminent un signal de commande inversé ($\overline{\phi}$) et un signal de commande ($\phi$) respectivement auxdits inverseurs cadencés ($S_5$ à $S_8$).

4. Circuit d'addition parallèle selon la revendication 1, caractérisé en ce que ledit second circuit de commande (24) est constitué par une porte OU (31), par une première porte NON-ET (33), par un inverseur (34) et par une seconde porte NON-ET (32) ; deux bornes d'entrée à la fois de ladite porte OU (31) et de ladite seconde porte NON-ET (32) sont connectées respectivement à ladite borne d'entrée de premier terme d'addition ($A_i$) et à ladite borne d'entrée de second terme d'addition ($B_i$), et une borne d'entrée de ladite première porte NON-ET (33) est connectée à une borne de sortie de ladite porte OU (31) et l'autre borne d'entrée de ladite première porte NON-ET (33) est connectée à une borne de sortie de ladite seconde porte NON-ET (32), et une borne de sortie de ladite première porte NON-ET (33) est connectée à une borne d'entrée dudit inverseur (34) ; et ladite borne de sortie de ladite première porte NON-ET (33) et une borne de sortie dudit inverseur (34) acheminent un signal de commande ($\phi$) et un signal inversé ($\overline{\phi}$) respectivement auxdits inverseurs cadencés ($S_9$ à $S_{12}$).

5. Circuit d'addition parallèle selon la revendication 1, caractérisé en ce que ledit second circuit de commande (24) est constitué par une porte ET (31a), une première porte NON-OU (33a), un inverseur (34) et une seconde porte NON-OU (32a) ; deux bornes d'entrée à la fois de ladite porte ET (31a) et de ladite seconde porte NON-OU (32a) sont connectées respectivement à ladite borne d'entrée de premier terme d'addition ($A_i$) et à ladite borne d'entrée de second terme d'addition ($B_i$), et une borne d'entrée de ladite première porte NON-OU (33a) est connectée à une borne de sortie de ladite porte ET (31a) et l'autre borne d'entrée de ladite première porte NON-OU (33a) est connectée à une borne de sortie de ladite seconde porte NON-OU (32a), et une borne de sortie de ladite première porte NON-OU (33a) est connectée à une borne d'entrée dudit inverseur (34) ; et ladite borne de sortie de ladite première porte NON-OU (33a) et une borne de sortie dudit inverseur (34) acheminent un signal de commande inversé ($\overline{\phi}$) et un signal de commande ($\phi$) respectivement auxdits inverseurs cadencés (S$_9$ à S$_{12}$).

**Patentansprüche**

1. Paralleladdierschaltung, dadurch gekennzeichnet, daß diese aufweist:

erste und zweite Volladdierer (X$_1$ bis X$_{n/2}$, Y$_1$ bis Y$_{n/2}$), deren jeder einen Addend-Eingangsanschluß und einen Augend-Eingangsanschluß, einen Übertrag-Eingangsanschluß, einen Summen-Ausgangsanschluß und einen Übertrag-Ausgangsanschluß hat, wobei die ersten und zweiten Volladdierer abwechselnd derart verbunden sind, daß der Übertrag-Ausgangsanschluß eines vorangehenden Volladdierers direkt mit dem Übertrag-Eingangsanschluß eines nachfolgenden Volladdierers verbunden ist,

wobei jeder der ersten Volladdierer (X$_1$ bis X$_{n/2}$) umfaßt:

eine erste Steuerschaltung (21), die auf ein Addend-Eingangssignal (A$_i$) und ein Augend-Eingangssignal (B$_i$), die am Addend-Eingangsanschluß bzw. am Augend-Eingangsanschluß liegen, anspricht, um ein erstes Schaltsteuersignal ($\phi$, $\overline{\phi}$) zu erzeugen, das einen ersten logischen Pegel annimmt, wenn das Addend-Eingangssignal und das Augend-Eingangssignal gleich sind, und das einen zweiten logischen Pegel annimmt, wenn diese nicht gleich sind,

eine Eingangsschaltung (22), die auf die Addend- und Augend-Eingangssignale anspricht, um ein NAND-Ausgangssignal oder ein NOR-Ausgangssignal der Addend- und Augend-Eingangssignale zu liefern, und

eine erste Schalter-Schaltung mit erstem bis viertem getakteten Inverter (S$_5$ bis S$_8$), die auf das erste Schaltsteuersignal ($\phi$, $\overline{\phi}$) ansprechen, wobei die ersten und vierten getakteten Inverter (S$_5$, S$_8$) freigegeben werden, um ein dort anliegendes Eingangssignal zu invertieren, wenn das erste Schaltsteuersignal auf dem ersten logischen Pegel ist, die zweiten und dritten getakteten Inverter (S$_6$, S$_7$) freigegeben werden, um ein dort anliegendes Eingangssignal zu invertieren, wenn das erste Schaltsteuersignal auf dem zweiten logischen Pegel ist, die ersten und zweiten getakteten Inverter (S$_5$, S$_6$) derart angeschlossen sind, daß sie ein übertrag-invertiertes Eingangssignal ($\overline{C_{i-1}}$), das am Übertrag-Eingangsanschluß liegt, und ein Übertrag-Eingangssignal (C$_{i-1}$) empfangen und mit ihren verbundenen Ausgängen am Summen-Ausgangsanschluß liegen, und die dritten und vierten getakteten Inverter (S$_7$, S$_8$) derart verbunden sind, daß sie jeweils das übertrag-invertierte Eingangssignal (C$_{i-1}$), das am Übertrag-Eingangsanschluß liegt, und ein Ausgangssignal der Eingangsschaltung (22) empfangen und mit ihren miteinander verbundenen Ausgängen am Übertrag-Ausgangsanschluß liegen, um ein Übertrag-Ausgangssignal (Ci) zu liefern, und

wobei jeder der zweiten Volladdierer (Y$_1$ bis Y$_{n/2}$) aufweist:

eine zweite steuerschaltung (24), die auf die Addend- und Augend-Eingangssignale (A$_i$, B$_i$) anspricht, um ein zweites Schaltsteuersignal ($\phi$, $\overline{\phi}$) zu liefern, das den ersten logischen Pegel annimmt, wenn das Addend-Eingangssignal und das Augend-Eingangssignal gleich sind, und das den zweiten logischen Pegel annimmt, wenn die Eingangssignale nicht gleich sind,

eine zweite Schalter-Schaltung mit fünftem bis achtem getaktetem Inverter (S$_9$ bis S$_{12}$), die auf das zweite Schaltsteuersignal ($\phi$, $\phi$) ansprechen, wobei die sechsten und achten getakteten Inverter (S$_{10}$, S$_{12}$) freigegeben werden, um ein dort anliegendes Eingangssignal zu invertieren, wenn das zweite Schaltsteuersignal auf dem ersten logischen Pegel ist, die fünften und siebenten getakteten Inverter (S$_9$, S$_{11}$) freigegeben werden, um ein dort anliegendes Eingangssignal zu invertieren, wenn das zweite Schaltsteuersignal auf dem zweiten logischen Pegel ist, die fünften und sechsten getakteten Inverter (S$_9$, S$_{10}$) derart angeschlossen sind, daß sie jeweils ein am Übertrag-Eingangsanschluß liegendes Übertrag-Eingangssignal (C$_{i-1}$) und ein übertrag-invertiertes Eingangssignal ($\overline{C_{i-1}}$) empfangen und mit ihren miteinander verbundenen Ausgängen am Summen-Ausgangsanschluß liegen, und die siebenten und achten getakteten Inverter (S$_{11}$, S$_{12}$) derart verbunden sind, daß sie jeweils das am Übertrag-Eingangsanschluß liegende Übertrag-Eingangssignal (C$_{i-1}$) und eines der Addend- und Augend-Signale (A$_i$, B$_i$) empfangen und mit ihren Ausgängen zusammen mit dem Übertrag-Ausgangsanschluß verbunden sind, um ein übertrag-invertiertes Ausgangssignal (Ci) zu erzeugen.

2. Paralleladdierschaltung nach Anspruch 1, dadurch gekennzeichnet, daß die erste steuerschaltung (21) aus einem ODER-Gatter (27), einem ersten NAND-Gatter (28) und einem Inverter (29) besteht und daß die erste Eingangsschaltung (22) aus einem zweiten NAND-Gatter (30) besteht, wobei zwei Eingangsanschlüsse des ODER-Gatters (27) und des zweiten NAND-Gatters (30) jeweils mit dem Addend-Eingangsanschluß (Ai) und dem Augend-Eingangsanschluß (Bi) verbunden sind, ein Eingangsanschluß des ersten NAND-Gatters (28) an einen Ausgangsanschluß des ODER-Gatters (27) und der andere Eingangsanschluß des ersten NAND-Gatters (28) an einen Ausgangsanschluß des zweiten NAND-Gatters (30) angeschlossen ist, ein Ausgangsanschluß des ersten NAND-Gatters (28) an einen Eingangsanschluß des Inverters (29) angeschlossen ist, der Ausgangsanschluß des zweiten NAND-Gatters (30) an einen Eingangsanschluß des vierten getakteten Inverters ($S_8$) angeschlossen ist, und der Ausgangsanschluß des ersten NAND-Gatters (28) und ein Ausgangsanschluß des Inverters (29) ein Steuersignal ($\phi$) bzw. ein invertiertes Steuersignal ($\overline{\phi}$) jeweils zu den getakteten Invertern ($S_5$ bis $S_8$) speisen.

3. Paralleladdierschaltung nach Anspruch 1, dadurch gekennzeichnet, daß die erste Steuerschaltung (21) aus einem UND-Gatter (27a), einem ersten NOR-Gatter (28a) und einem Inverter (29) besteht und daß die erste Eingangsschaltung (22) aus einem zweiten NOR-Gatter (30a) besteht, wobei zwei Eingangsanschlüsse des UND-Gatters (27a) und des zweiten NOR-Gatters (30a) jeweils mit dem Addend-Eingangsanschluß (Ai) bzw. dem Augend-Eingangsanschluß (Bi) verbunden sind, ein Eingangsanschluß des NOR-Gatters (28a) mit einem Ausgangsanschluß des UND-Gatters (27a) und der andere Eingangsanschluß des ersten NOR-Gatters (28a) mit einem Ausgangsanschluß des zweiten NOR-Gatters (30a) verbunden sind, der Ausgangsanschluß des ersten NOR-Gatters (28a) mit einem Eingangsanschluß des Inverters (29) verbunden ist, der Ausgangsanschluß des zweiten NOR-Gatters (30a) mit einem Eingangsanschluß des vierten getakteten Inverters ($S_8$) verbunden ist und der Ausgangsanschluß des ersten NOR-Gatters (28a) und der Ausgangsanschluß des Inverters (29) ein invertiertes Steuersignal ($\overline{\phi}$) und ein Steuersignal ($\phi$) jeweils zu den getakteten Invertern ($S_5$ bis $S_8$) speisen.

4. Paralleladdierschaltung nach Anspruch 1, dadurch gekennzeichnet, daß die zweite Steuerschaltung (24) aus einem ODER-Gatter (31), einem ersten NAND-Gatter (33), einem Inverter (34) und einem zweiten NAND-Gatter (32) besteht, wobei zwei Eingangsanschlüsse des ODER-Gatters (31) und des zweiten NAND-Gatters (32) jeweils an den Addend-Eingangsanschluß (Ai) und den Augend-Eingangsanschluß (Bi) angeschlossen sind, ein Eingangsanschluß des ersten NAND-Gatters (33) mit einem Ausgangsanschluß des ODER-Gatters (31) und der andere Eingangsanschluß des ersten NAND-Gatters (33) mit einem Ausgangsanschluß des zweiten NAND-Gatters (32) verbunden sind, ein Ausgangsanschluß des ersten NAND-Gatters (33) an einen Eingangsanschluß des Inverters (34) angeschlossen ist und der Ausgangsanschluß des ersten NAND-Gatters (33) und ein Ausgangsanschluß des Inverters (34) ein Steuersignal ($\phi$) und ein invertiertes Signal ($\overline{\phi}$) jeweils zu den getakteten Invertern ($S_9$ bis $S_{12}$) speisen.

5. Paralleladdierschaltung nach Anspruch 1, dadurch gekennzeichnet, daß die zweite Steuerschaltung (24) aus einem UND-Gatter (31a), einem ersten NOR-Gatter (33a), einem Inverter (34) und einem zweiten NOR-Gatter (32a) besteht, wobei zwei Eingangsanschlüsse des UND-Gatters (31a) und des zweiten NOR-Gatters (32a) jeweils mit dem Addend-Eingangsanschluß (Ai) und dem Augend-Eingangsanschluß (Bi) verbunden sind, ein Eingangsanschluß des ersten NOR-Gatters (33a) an einen Ausgangsanschluß des UND-Gatters (31a) und der andere Eingangsanschluß des ersten NOR-Gatters (33a) an einen Ausgangsanschluß des zweiten NOR-Gatters (32a) angeschlossen sind, ein Ausgangsanschluß des ersten NOR-Gatters (33a) an einen Eingangsanschluß des Inverters (34) angeschlossen ist und der Ausgangsanschluß des ersten NOR-Gatters (33a) und ein Ausgangsanschluß des Inverters (34) ein Invertersteuersignal ($\overline{\phi}$) und ein Steuersignal ($\phi$) jeweils zu den getakteten Invertern ($S_9$ bis $S_{12}$) speisen.

# F I G. 1

# F I G. 2

# F I G. 3

# F I G. 4

# F I G. 5A

# F I G. 5B

# F I G. 6A

# F I G. 6B

13

EP 0 143 456 B1

F I G. 7A

F I G. 7B

F I G. 7C

F I G. 7D

14

# FIG. 8A

VDD

IN ———— OUT

# FIG. 8B

VDD

IN ———— OUT

# FIG. 8C

VDD

IN ———— OUT

EP 0 143 456 B1

15

# FIG. 9

| | S1 | | S2 | | S3 | | S4 | | Sn-1 | | Sn | |

CO —| CO  $\overline{C1}$ |—| $\overline{C1}$  C2 |—| C2  $\overline{C3}$ |—| $\overline{C3}$  C4 |— - - - - - —| Cn-2  $\overline{Cn-1}$ |—| $\overline{Cn-1}$  Cn |— Cn

| Y1 | X1 | Y2 | X2 | Yn/2 | Xn/2 |

A1 B1   A2 B2   A3 B3   A4 B4   An-1 Bn-1   An Bn